# FASCICULE DE BREVET EUROPEEN

(11) **EP 2 602 151 B1**
(45) Date de publication et mention de la délivrance du brevet: **04.11.2020**
(21) Numéro de dépôt: 12195704.7
(22) Date de dépôt: 05.12.2012
(51) Int. Cl.: B60N 2/68, B60N 2/75

(54) **Armature d'accoudoir de siège**
Seat armrest frame
Armstützgestell für einen Sitz

(30) Priorité: 07.12.2011 FR 1161284
(43) Date de publication de la demande: 12.06.2013
(73) Titulaire: FAURECIA Sièges d'Automobile, 92000 Nanterre (FR)
(72) Inventeur: Charles, Philippe, 70300 Luxeuil Les Bains (FR); Calais, Blandine, 92160 Antony (FR); Soltner, Stéphane, 70240 Mailleroncourt-Charette (FR)
(74) Mandataire: Cabinet Beaumont

(56) Documents cités:
- EP-A1- 0 518 358
- DE-U1-202008 009 374
- GB-A- 2 381 741
- US-A1- 2010 207 441

## Description

### Domaine de l'invention

La présente invention concerne une armature d'accoudoir de siège, notamment de siège d'un véhicule automobile.

### Exposé de l'art antérieur

La banquette de certains véhicules automobiles peut comprendre un accoudoir central susceptible de pivoter entre une position escamotée et une position de fonctionnement. Dans la position escamotée, l'accoudoir peut être rabattu contre le dossier du siège et, dans la position de fonctionnement, l'accoudoir peut être sensiblement parallèle à l'assise du siège.

L'accoudoir comprend généralement une armature montée de façon pivotante sur l'armature du dossier du siège. Une garniture, composée d'une matelassure en mousse contenue dans une coiffe en tissu, entoure l'armature.

Le document DE 202008009374 décrit des armatures d'accoudoir comprenant un cadre formé par des tiges métalliques en acier dont les extrémités sont reliées les unes aux autres par des éléments de liaison en plastique surmoulés sur les extrémités des tiges aux quatre coins du cadre. Le document US2010/207441 montre une armature d'accoudoir comprenant une première portion comportant un arbre et un revêtement et une seconde portion comportant au moins une branche fixée au revêtement.

Les armatures d'accoudoir décrites dans ce document présentent plusieurs inconvénients. En effet, les dimensions du moule sont importantes puisque le moule doit contenir toutes les tiges métalliques pour réaliser simultanément les éléments de liaison. Le coût de fabrication du moule est donc élevé. En outre, les éléments de liaison étant disposés aux quatre coins du cadre, il faut prévoir au moins quatre points d'injection du matériau plastique dans le moule. La mise en oeuvre du procédé de surmoulage est donc complexe.

En outre, l'armature complète de l'accoudoir est obtenue après l'étape de surmoulage. Des précautions particulières doivent être prises lors du transport et du stockage de l'armature pour ne pas l'abîmer.

Il existe donc un besoin d'une armature d'accoudoir de siège dont la structure est adaptée à la mise en oeuvre de procédés de fabrication, de transport et de stockage simplifiés.

### Résumé

Un objet d'un exemple de réalisation de l'invention est de pallier les inconvénients des armatures d'accoudoir décrites précédemment.

Un autre objet d'un exemple de réalisation de la présente invention est de prévoir une armature d'accoudoir de siège dont la fabrication comprend l'utilisation d'un moule de structure simple et de dimensions réduites.

Un autre objet d'un exemple de réalisation de la présente invention est de prévoir une armature d'accoudoir de siège dont le transport et le stockage peuvent être réalisés avec un minimum de précautions particulières.

Un autre objet d'un exemple de réalisation de la présente invention est de prévoir une armature d'accoudoir de siège ayant une structure simple.

Dans ce but, la présente invention prévoit une armature d'accoudoir comprenant une première portion comportant un arbre et un revêtement unique en un matériau plastique surmoulé autour de l'arbre et une seconde portion comportant au moins une branche fixée au revêtement.

Selon un exemple de réalisation de la présente invention, la seconde portion comporte deux branches fixées au revêtement.

Selon un exemple de réalisation de la présente invention, le revêtement comprend une première protubérance comprenant une première ouverture et une seconde protubérance comprenant une seconde ouverture, l'extrémité de l'une des branches pénétrant dans la première ouverture et l'extrémité de l'autre branche pénétrant dans la seconde ouverture.

Selon un exemple de réalisation de la présente invention, le revêtement comprend, en outre, une première ailette plane s'étendant depuis la première protubérance parallèlement à l'axe de l'arbre et une seconde ailette plane s'étendant depuis la seconde protubérance parallèlement à l'axe de l'arbre.

Selon un exemple de réalisation de la présente invention, le revêtement recouvre l'arbre au moins entre les première et seconde protubérances.

Selon un exemple de réalisation de la présente invention, l'arbre comprend deux extrémités axiales formant pivot et une surface externe reliant les deux extrémités axiales, le revêtement recouvrant la totalité de la surface externe.

Selon un exemple de réalisation de la présente invention, le revêtement comprend au moins un élément en forme de pince destiné à coopérer avec le siège en fonctionnement.

La présente invention prévoit également un siège comprenant un dossier et un accoudoir comprenant une armature telle que définie précédemment reliée au dossier de façon pivotante.

La présente invention prévoit également un procédé de fabrication de l'armature telle que définie précédemment, comprenant les étapes suivantes :
- disposer l'arbre dans un moule comprenant au moins un point d'injection du matériau plastique ;
- former la première portion par surmoulage du revêtement unique autour de l'arbre en introduisant le matériau plastique dans le moule par le point d'injection ;
- retirer la première portion du moule ; et
- fixer la seconde portion au revêtement.

Selon un exemple de réalisation de la présente invention, le moule comprend un unique point d'injection du matériau plastique et la première portion est formée par surmoulage du revêtement unique autour de l'arbre en introduisant le matériau plastique dans le moule par le point d'injection unique.

Selon un exemple de réalisation de la présente invention, la seconde portion est emmanchée en force dans le revêtement de la première portion d'armature.

### Brève description des dessins

Ces objets, caractéristiques et avantages, ainsi que d'autres seront exposés en détail dans la description suivante d'exemples de réalisation particuliers faite à titre non limitatif en relation avec les figures jointes parmi lesquelles :
la figure 1 est une vue en perspective schématique d'un siège comprenant un exemple de réalisation d'un accoudoir selon l'invention ;
la figure 2 est une vue en perspective avec éclatement de l'accoudoir de la figure 1 ;
la figure 3 est une vue en perspective de l'armature et d'un porte-gobelet de l'accoudoir de la figure 2 ;
la figure 4 est une section de l'accoudoir de la figure 2 ;
la figure 5 est une vue en perspective d'une portion d'armature de l'accoudoir de la figure 2 ; et
la figure 6 est une section d'un moule à une étape de fabrication de la portion d'armature de la figure 2.

### Description détaillée

Par souci de clarté, de mêmes éléments ont été désignés par de mêmes références aux différentes figures. En outre, seuls les éléments nécessaires à la compréhension de l'invention sont décris en détail par la suite.

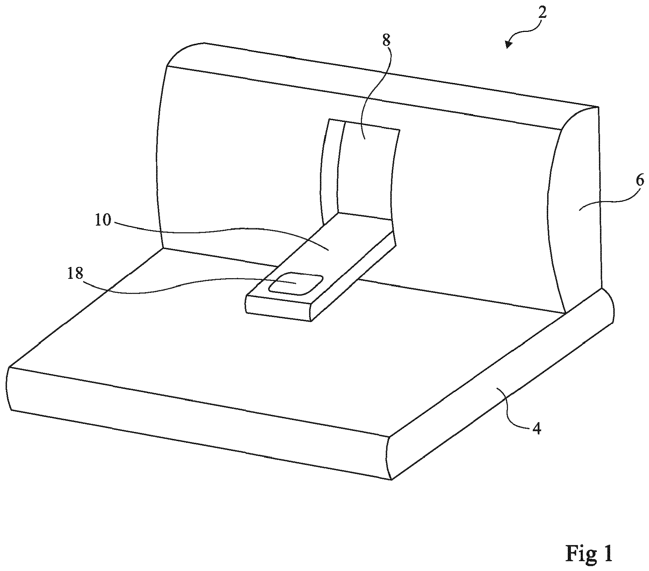

La figure 1 représente, de façon schématique, un siège 2, par exemple une banquette arrière 2 de véhicule automobile, comprenant une assise 4 et un dossier 6 relié à l'assise 4. Le siège 2 comprend, en outre, un accoudoir 10 relié de façon pivotante au dossier 6 et adapté à être pivoté entre une position de fonctionnement et une position escamotée. En position de fonctionnement, l'accoudoir 10 est sensiblement parallèle à l'assise 4 du siège 2. En position escamotée, l'accoudoir 10 est plaqué contre le dossier 6 du siège et est en partie disposé dans un enfoncement 8 prévu dans le dossier 6.

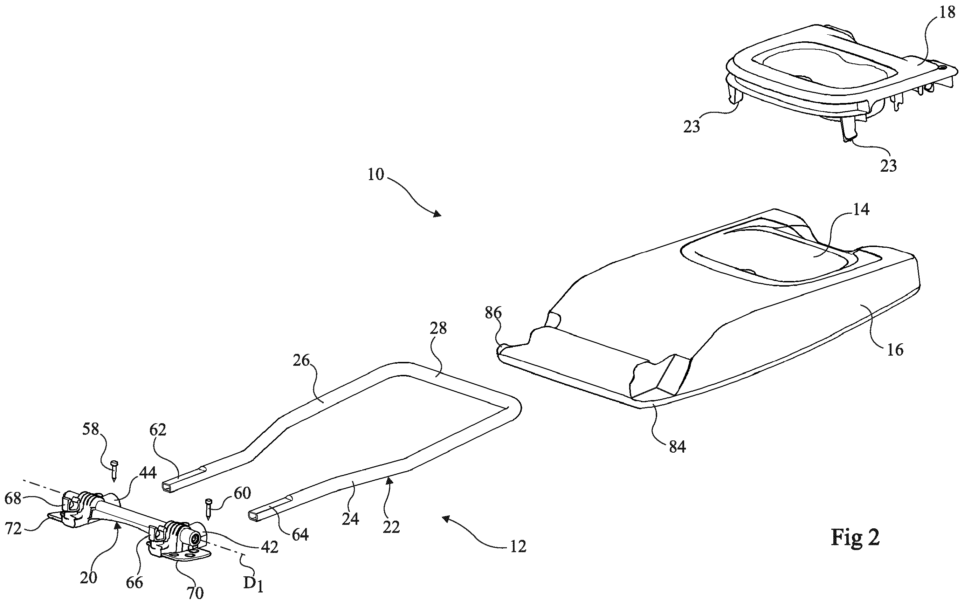

La figure 2 représente en vue éclatée un exemple de réalisation de l'accoudoir 10. L'accoudoir 10 comprend :
- une armature 12 destinée à être fixée à l'armature, non représentée, du dossier 6 du siège 2 ;
- une garniture 14 entourant au moins partiellement l'armature 12, la garniture comprenant, par exemple, une matelassure en mousse contenue dans une coiffe 16 en tissu ; et éventuellement ;
- un accessoire 18 fixé à l'armature 12.

Dans l'exemple de réalisation, l'accessoire 18 est un porte-gobelet. La garniture 14 peut entourer partiellement l'accessoire 18 et la coiffe 16 peut être fixée au porte-gobelet 18. L'armature 12 comprend une première portion d'armature 20 et une seconde portion d'armature 22 fixée à la première portion d'armature 20. Le porte-gobelet 18 peut être fixé à l'armature 12, par exemple du côté de la seconde portion d'armature 22 opposée à la première portion d'armature 20, par l'intermédiaire de pattes souples 23. Selon une variante, l'accessoire 18 n'est pas présent.

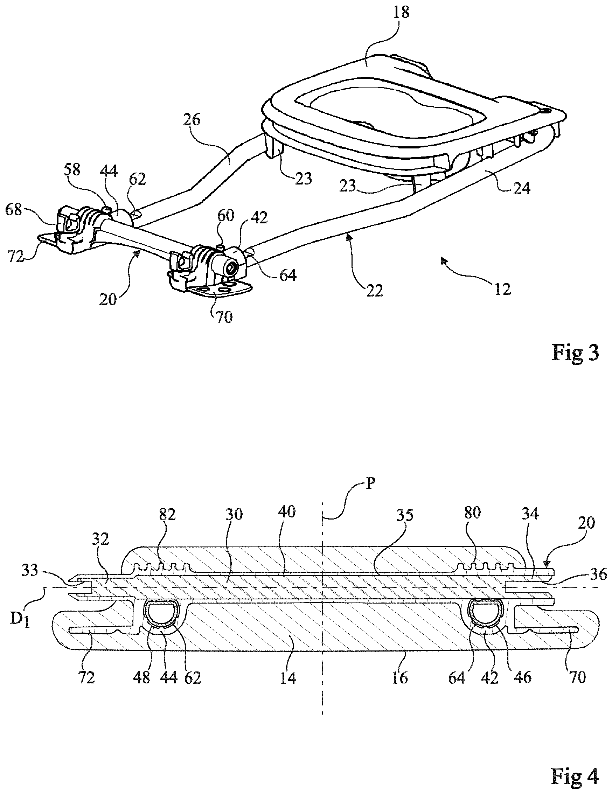

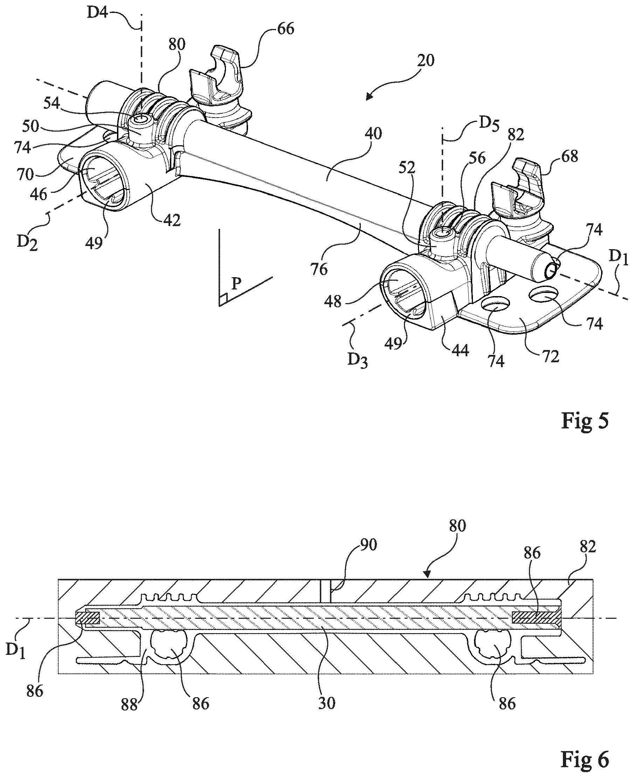

La figure 3 est une vue en perspective de l'armature 12 et du porte-gobelet 18. La figure 4 est une section de l'accoudoir. La figure 5 représente une vue en perspective de la première portion d'armature 20.

La seconde portion d'armature 22 comprend une tige creuse mise selon la forme générale d'un "U" et comprenant deux bras 24, 26 parallèles reliés par une base 28. La tige 22 peut être une tige à section circulaire dont le diamètre varie de 12 à 18 mm, et est, par exemple, de l'ordre de 14 mm. A titre de variante, la tige 22 peut correspondre à un tube plein. En outre, la tige 22 peut avoir une section autre que circulaire, par exemple carrée ou rectangulaire. La tige 22 peut être en n'importe quel matériau adapté, par exemple en un alliage métallique, par exemple de l'acier, un alliage de cuivre, un alliage de zinc ou un alliage d'aluminium. A titre de variante, la seconde portion d'armature 22 peut comprendre un bras unique qui se prolonge par un élément formant un cadre.

La première portion d'armature 20 comprend un arbre 30 d'axe D₁. L'arbre 30 est par exemple une tige cylindrique pleine dont le diamètre peut varier de 8 à 10 mm. La longueur axiale de l'arbre 30 peut varier de 150 mm à 280 mm. L'arbre 30 comprend des extrémités axiales 32 et 34 et une surface externe 35 entre les extrémités axiales. L'arbre 30 peut comprendre une portion de diamètre réduit à l'extrémité axiale 32. En outre, une ouverture 33 cylindrique d'axe D₁ peut être prévue à l'extrémité axiale 32. A l'extrémité opposée 34, l'arbre 30 peut comprendre une ouverture taraudée 36 d'axe D₁. L'arbre 30 est en un alliage métallique, par exemple de l'acier. L'arbre 30 et la seconde portion d'armature 22 peuvent être en des alliages métalliques identiques ou différents. La première portion d'armature 20 peut avoir une structure approximativement symétrique par rapport à un plan médian P perpendiculaire à l'axe D₁.

La première portion d'armature 20 comprend, en outre, un revêtement 40 en un matériau plastique surmoulé sur l'arbre 30. A titre d'exemple, le matériau plastique est un polyamide comprenant des fibres de verre ou une charge minérale. Le revêtement 40 recouvre la totalité de la surface externe 35 de l'arbre 30. A titre de variante, le revêtement 40 peut ne pas recouvrir les extrémités 32, 34 de l'arbre 30. Le revêtement 40 comprend, en outre, deux protubérances 42, 44. La protubérance 42 délimite une ouverture 46 qui s'étend selon un axe D₂ perpendiculaire à l'axe D₁ et la protubérance 44 délimite une ouverture 48 qui s'étend selon un axe D₃ perpendiculaire à l'axe D₁. Des nervures 49 peuvent être prévues dans les ouvertures 46, 48 et s'étendre selon les axes D₂ et D₃. Le plan de la section de la figure 4 contient l'axe D₁ et est perpendiculaire aux axes D₂ et D₃.

Dans le présent exemple de réalisation, le revêtement 40 comprend, en outre, deux portions cylindriques 50, 52. La portion cylindrique 50 délimite une ouverture cylindrique 54 d'axe D₄ perpendiculaire aux axes D₁ et D₂ et débouchant dans l'ouverture 46 et la portion cylindrique 52 délimite une ouverture cylindrique 56 d'axe D₅ perpendiculaire à l'axe D₂ et débouchant dans l'ouverture 48. Les ouvertures 54, 56 sont destinées au passage de vis 58, 60 représentées en figure 2.

Les extrémités libres 62, 64 des bras 24, 26 de la seconde portion d'armature pénètrent dans les ouvertures 46, 48. Chaque extrémité 62, 64 de bras 24, 26 comprend un méplat et l'ouverture 46, 48 associée peut avoir une forme au moins en partie complémentaire de cette extrémité 62, 64. Les extrémités des vis 58, 60 sont en appui contre les méplats 62, 64 et assurent la fixation des portions d'extrémité 62, 64 dans les ouvertures 46, 48. A titre de variante, les vis 58, 60 peuvent ne pas être présentes et les extrémités 62, 64 des bras 24, 26 peuvent être fixées dans les ouvertures 46, 48 par n'importe quel moyen, notamment par montage en force, par collage, par rivetage ou par fixation par clips. Dans la variante de réalisation selon laquelle la seconde portion d'armature ne comprend qu'un bras unique, le revêtement 40 peut ne comprendre qu'une seule protubérance dans laquelle est fixé le bras unique.

Le revêtement 40 comprend, en outre, deux portions de fixation 66, 68 ayant chacune la forme d'une pince. Chaque portion de fixation 66, 68 est disposée sensiblement de façon diamétralement opposée à l'une des protubérances 42, 44 par rapport à l'arbre 30. A titre de variante, le revêtement 40 peut ne comprendre qu'une seule portion de fixation. Le revêtement 40 comprend, en outre, deux ailettes latérales 70, 72, éventuellement traversées par des ouvertures 74. Chaque ailette 70, 72 a une forme plane. L'ailette 70 s'étend parallèlement à l'axe D₁ depuis la protubérance 42 en s'éloignant du plan de symétrie P de la première portion d'armature 20. L'ailette 72 s'étend parallèlement à l'axe D₁ depuis la protubérance 44 en s'éloignant du plan de symétrie P de la première portion d'armature 20. A titre de variante, le revêtement 40 ne comprend pas d'ailette ou comprend une seule ailette.

En outre, le revêtement 40 peut comprendre des nervures de rigidification, notamment une nervure 76 qui s'étend entre les deux portions 42, 44. Le revêtement 40 comprend des portions de rigidification striées 80, 82. La portion striée 80 comprend des stries qui s'étendent radialement par rapport à l'axe D₁ entre la protubérance 42 et la portion de fixation 66 et la portion striée 82 comprend des stries qui s'étendent radialement par rapport à l'axe D₁ entre la protubérance 44 et la portion de fixation 68.

En fonctionnement, les extrémités 32, 34 de l'arbre 30 recouvertes du revêtement 40 sont montées de façon pivotante sur l'armature du dossier 6 du siège 2. Le fait que le revêtement 40 recouvre les extrémités 32, 34 de l'arbre 30 permet, de façon avantageuse, de réaliser facilement un palier lisse en plastique. Lorsque les extrémités 32, 34 de l'arbre 30 ne sont pas recouvertes du revêtement, les extrémités 32, 34 de l'arbre 30 peuvent être montées de façon pivotante sur l'armature du dossier 6 selon des paliers métalliques ou par l'intermédiaire de roulements.

Les portions en forme de pince 66, 68 sont adaptées à agripper de façon temporaire une tige de l'armature du dossier 6, non représentée, lorsque l'accoudoir 10 est en position de fonctionnement. Une force supérieure à un seuil donné doit alors être appliquée à l'accoudoir 10 pour que les portions de fixation 66, 68 libèrent la tige de l'armature du dossier 6 et que l'accoudoir 10 quitte la position de fonctionnement. Ceci permet notamment d'éviter des vibrations indésirables de l'accoudoir 10 en position de fonctionnement.

Les ailettes 70, 72 sont disposées dans des régions 84, 86 de l'accoudoir 10 où l'épaisseur de la garniture 14 est réduite. Les ailettes 70, 72 permettent d'augmenter localement la rigidité de l'accoudoir 10.

La figure 6 illustre une étape du procédé de fabrication de la première portion d'armature 20. Le procédé comprend une étape de surmoulage d'un matériau plastique autour de l'arbre 30 pour former le revêtement 40. L'étape de surmoulage met en oeuvre un moule 80 comprenant une portion supérieure de moule 82 et une portion inférieure de moule 84. L'arbre 30 est disposé dans le moule 80. Des pièces additionnelles 86 sont disposées dans le moule pour délimiter, avec l'arbre 30 et les portions de moule 82, 84, une cavité 88 destinée à être remplie par le matériau plastique. De façon avantageuse, le revêtement 40 recouvre la totalité de la surface extérieure de l'arbre 30. Un seul point d'injection 90 du matériau plastique est alors à prévoir dans le moule 80. Ceci facilite le procédé de fabrication de la première portion d'armature 20.

Le procédé de fabrication selon l'invention permet, de façon avantageuse, la réalisation d'un revêtement 40 par une seule étape de moulage. La fonction principale du revêtement 40 est la fixation de la seconde portion d'armature 22 à la première portion d'armature 20. Toutefois, comme le revêtement 40 est réalisé par moulage, la présente invention permet avantageusement d'intégrer des fonctions supplémentaires au revêtement 40, comme celles réalisées par les portions en forme de pince 66, 68, les ailettes 70, 72 et les nervures de rigidification. Si la seconde portion d'armature 22 était fixée directement à la première portion d'armature 20, ces fonctions supplémentaires devraient être réalisées par des pièces supplémentaires rapportées sur la première portion d'armature 20.

L'assemblage de la seconde portion d'armature 22 sur la première portion d'armature 20 peut être réalisé en un lieu différent du lieu de fabrication de la première portion d'armature 20. De ce fait, le transport et le stockage de la première portion d'armature 20 et de la seconde portion d'armature 22 depuis leur lieu de fabrication jusqu'au lieu d'assemblage de l'accoudoir 10 peuvent être réalisés séparément.

Sur le lieu d'assemblage, la seconde portion d'armature 22 est fixée à la première portion d'armature 20. Un accessoire, par exemple le porte-gobelet 18, peut être fixé à l'armature 12, par exemple du côté de la seconde portion d'armature 22 opposée à la première portion d'armature 20. La garniture 14 peut être réalisée selon un procédé de fabrication appelé procédé in situ selon lequel la matelassure est formée au contact de la coiffe. Toutefois, la matelassure de la garniture 14 peut être réalisée séparément. La matelassure peut alors être disposée en premier sur l'armature 12 et la coiffe 16 est ensuite fixée à la matelassure et éventuellement également au porte-gobelet 18.

Des modes de réalisation particuliers de la présente invention ont été décrits. Diverses variantes et modifications apparaîtront à l'homme de l'art. En particulier, au lieu d'un porte-gobelet, l'accessoire 18 peut être un rangement pouvant éventuellement être refermé par un couvercle.

## Revendications

1. Armature (12) d'accoudoir (10) comprenant :
- une première portion (20) comportant un arbre (30) et un revêtement (40) unique en un matériau plastique surmoulé autour de l'arbre ; et
- une seconde portion (22) comportant au moins une branche (24, 26) fixée au revêtement,
dans laquelle l'arbre (30) comprend deux extrémités axiales (32, 36) et une surface externe (35) reliant les deux extrémités axiales, le revêtement (40) recouvrant la totalité de la surface externe ou la totalité de la surface externe à l'exception des extrémités axiales.

2. Armature selon la revendication 1, dans laquelle la seconde portion (22) comporte deux branches (24, 26) fixées au revêtement (40).

3. Armature selon la revendication 2, dans laquelle le revêtement (40) comprend une première protubérance (42) comprenant une première ouverture (46) et une seconde protubérance (44) comprenant une seconde ouverture (48), l'extrémité de l'une des branches (24) pénétrant dans la première ouverture et l'extrémité de l'autre branche (26) pénétrant dans la seconde ouverture.

4. Armature selon la revendication 3, dans laquelle le revêtement (40) comprend, en outre, une première ailette plane (70) s'étendant depuis la première protubérance parallèlement à l'axe (D₁) de l'arbre et une seconde ailette plane (72) s'étendant depuis la seconde protubérance parallèlement à l'axe (D₁) de l'arbre.

5. Armature selon la revendication 3 ou 4, dans laquelle le revêtement (40) recouvre l'arbre (30) au moins entre les première et seconde protubérances (42, 44).

6. Armature selon l'une quelconque des revendications 1 à 5, dans laquelle les deux extrémités axiales (32, 36) forment un pivot.

7. Armature selon l'une quelconque des revendications 1 à 6, dans laquelle le revêtement (40) comprend au moins un élément (66, 68) en forme de pince destiné à coopérer avec le siège (2) en fonctionnement.

8. Siège (2) comprenant :
- un dossier (6) ; et
- un accoudoir (10) comprenant une armature (12) selon l'une quelconque des revendications 1 à 7 reliée au dossier de façon pivotante.

9. Procédé de fabrication de l'armature (12) selon l'une quelconque des revendications 1 à 7, comprenant les étapes suivantes :
- disposer l'arbre (30) dans un moule (80) comprenant au moins un point d'injection (90) du matériau plastique ;
- former la première portion (20) par surmoulage du revêtement (40) unique autour de l'arbre en introduisant le matériau plastique dans le moule par le point d'injection ;
- retirer la première portion (20) du moule ; et
- fixer la seconde portion (22) au revêtement (40).

10. Procédé de fabrication selon la revendication 9, dans lequel le moule (80) comprend un unique point d'injection (90) du matériau plastique et dans lequel la première portion (20) est formée par surmoulage du revêtement (40) unique autour de l'arbre (30) en introduisant le matériau plastique dans le moule par le point d'injection unique.

11. Procédé de fabrication selon la revendication 10, dans lequel la seconde portion (22) est emmanchée en force dans le revêtement (40) de la première portion d'armature (20).

## Patentansprüche

1. Ein Rahmen (12) einer Armlehne (10), der folgendes aufweist:
einen ersten Teil (20), der einen Schaft (30) und eine einzelne Kunststoffmaterialverkleidung (40) aufweist, die um den Schaft herum gespritzt ist; und
einen zweiten Teil (22), der mindestens einen an der Verkleidung befestigten Zweig (24, 26) umfasst,
wobei der Schaft (30) zwei axiale Enden (32, 36) und eine die beiden axialen Enden verbindende Außenfläche (35) aufweist, wobei die Verkleidung (40) die gesamte Außenfläche oder die gesamte Außenfläche mit Ausnahme der beiden axialen Enden abdeckt.

2. Rahmen nach Anspruch 1, wobei der zweite Teil (22) zwei Zweige (24, 26) aufweist, die an der Verkleidung (40) befestigt sind.

3. Rahmen nach Anspruch 2, wobei die Verkleidung (40) einen ersten Vorsprung (42) mit einer ersten Öffnung (46) und einen zweiten Vorsprung (44) mit einer zweiten Öffnung (48) aufweist, wobei das Ende des einen Zweigs (24) in die erste Öffnung und das Ende des anderen Zweigs (26) in die zweite Öffnung eingeführt ist.

4. Rahmen nach Anspruch 3, wobei die Verkleidung (40) ferner einen ersten planaren Flügel (70), der sich von dem ersten Vorsprung parallel zur Schaftachse (D1) erstreckt, und einen zweiten planaren Flügel (72) aufweist, der sich von dem zweiten Vorsprung parallel zur Schaftachse (D1) erstreckt.

5. Rahmen nach Anspruch 3 oder 4, wobei die Verkleidung (40) den Schaft (30) zumindest zwischen dem ersten und zweiten Vorsprung (42, 44) abdeckt.

6. Rahmen nach einem der Ansprüche 1 bis 5, wobei die beiden axialen Enden (32, 36) einen Schwenkpunkt bilden.

7. Rahmen nach einem der Ansprüche 1 bis 6, wobei die Verkleidung (40) wenigstens ein klammerförmiges Element (66, 68) aufweist, das dazu bestimmt ist im Gebrauch mit dem Sitz (2) zusammenzuwirken.

8. Ein Sitz (2), aufweisend:
eine Rückenlehne (6); und
eine Armlehne (10), die den Rahmen (12) nach einem der Ansprüche 1 bis 7 aufweist und schwenkbar mit der Rückenlehne verbunden ist.

9. Herstellungsverfahren für den Rahmen (12) nach einem der Ansprüche 1 bis 7, das die folgenden Schritte aufweist:
Anordnen des Schaftes (30) in einer Form (80), die wenigstens eine Einspritzstelle (90) für das Kunststoffmaterial aufweist;
Ausbilden des ersten Teils (20) durch Spritzen der einzelnen Verkleidung (40) um den Schaft herum, durch Einführen des Kunststoffmaterials in die Form über die Einspritzstelle;
Entnehmen des ersten Teils (20) aus der Form; und
Anbringen des zweiten Teils (22) an der Verkleidung (40).

10. Herstellungsverfahren nach Anspruch 9, wobei die Form (80) eine einzige Einspritzstelle (90) für das Kunststoffmaterial aufweist und wobei der erste Teil (20) durch Spritzen der einzigen Verkleidung (40) um den Schaft (30) herum gebildet wird, indem das Kunststoffmaterial über die einzige Einspritzstelle in die Form eingeführt wird.

11. Herstellungsverfahren nach Anspruch 10, wobei der zweite Teil (22) in die Verkleidung (40) des ersten Rahmenteils (20) eng eingepasst wird.

## Claims

1. A frame (12) of an armrest (10) comprising:
a first portion (20) comprising a shaft (30) and a single plastic material lining (40) overmolded around the shaft; and
a second portion (22) comprising at least one branch (24, 26) attached to the lining,
wherein the shaft (30) comprises two axial ends (32, 36) and an external surface (35) connecting the two axial ends, the lining (40) covering the entire external surface or the entire external surface except the two axial ends.

2. The frame of claim 1, wherein the second portion (22) comprises two branches (24, 26) attached to the lining (40).

3. The frame of claim 2, wherein the lining (40) comprises a first protrusion (42) comprising a first opening (46) and a second protrusion (44) comprising a second opening (48), the end of one of the branches (24) penetrating into the first opening and the end of the other branch (26) penetrating into the second opening.

4. The frame of claim 3, wherein the lining (40) further comprises a first planar fin (70) extending from the first protrusion parallel to the shaft axis (D₁) and a second planar fin (72) extending from the second protrusion parallel to the shaft axis (D₁).

5. The frame of claim 3 or 4, wherein the lining (40) covers the shaft (30) at least between the first and second protrusions (42, 44).

6. The frame of any of claims 1 to 5, wherein the two axial ends (32, 36) form a pivot.

7. The frame of any of claims 1 to 6, wherein the lining (40) comprises at least one clamp-shaped element (66, 68) intended to cooperate with the seat (2) in use.

8. A seat (2) comprising:
a backrest (6); and
an armrest (10) comprising the frame (12) of any of claims 1 to 7 pivotally connected to the backrest.

9. A method for manufacturing the frame (12) of any of claims 1 to 7, comprising the steps of:
arranging the shaft (30) in a mold (80) comprising at least one point of injection (90) of the plastic material;
forming the first portion (20) by overmolding of the single lining (40) around the shaft by introducing the plastic material into the mold through the injection point;
removing the first portion (20) from the mold; and
attaching the second portion (22) to the lining (40).

10. The manufacturing method of claim 9, wherein the mold (80) comprises a single point of injection (90) of the plastic material and wherein the first portion (20) is formed by overmolding of the single lining (40) around the shaft (30) by introducing the plastic material into the mold through the single injection point.

11. The manufacturing method of claim 10, wherein the second portion (22) is tight-fit into the lining (40) of the first frame portion (20).
